# EUROPEAN PATENT SPECIFICATION

(11) **EP 0 403 248 B1**
(45) Date of publication and mention of the grant of the patent: **21.08.1996**
(21) Application number: 90306436.8
(22) Date of filing: 13.06.1990
(51) Int. Cl.: H04N 5/335, H04N 3/15, H04N 5/217, H04N 9/04

(54) **Photoelectric converting apparatus**
Photoelektrisches Umwandlungsgerät
Appareil de conversion photoélectrique

(30) Priority: 14.06.1989 JP 149723/89
(43) Date of publication of application: 19.12.1990
(73) Proprietor: CANON KABUSHIKI KAISHA, Tokyo (JP)
(72) Inventor: Yushiya, Akihiko, c/o Canon K.K., Ohta-ku, Tokyo (JP); Shinohara, Mahito, c/o Canon K.K., Ohta-ku, Tokyo (JP)
(74) Representative: Beresford, Keith Denis Lewis

(56) References cited:
- US-A- 4 831 451
- PATENT ABSTRACTS OF JAPAN vol. 3, no. 153 (E-159) 15 December 1979, & JP-A- 54 133823 (FUJITSU K.K.) 17 October 1979,
- IEEE TRANSACTIONS ON ELECTRON DEVICES. vol. 32, no. 8, August 1985, NEW YORK US pages 1541 - 1545; Yuzuki et al.: "A 5732-Element Linear CCD Image Sensor"
- PATENT ABSTRACTS OF JAPAN vol. 6, no. 140 (E-121)(1018) 29 July 1982, & JP-A-065074 (SHIYOUICHI TANAKA) 20 April 1982

## Description

### BACKGROUND OF THE INVENTION

### Field of the Invention

The present invention relates to a photoelectric converting apparatus and, more particularly, to a photoelectric converting apparatus in which a first signal output from a photoelectric conversion unit is stored and the first signal is output in correspondence to a second signal which is output from the photoelectric conversion unit.

### Related Background Art

In recent years, a video camera using a solid-state image pickup device as an image input device has widely been used. It is considered that this is because the solid-state image pickup device has largely contributed to the realization of the small size, light weight, and low costs of the video camera. Although almost all of the video cameras for public use need colour images, the solid-state image pickup device of a single plate is a main stream from viewpoints of the realization of small size, light weight, and low costs. In the case of obtaining a colour image by using the single plate type solid state image pickup device, in many cases, a chrominance signal is obtained by adhering mosaic colour filters to the solid-state image pickup device. In the case of obtaining an image signal by using such colour filters, when considering only the signal of one horizontal line, all of the chrominance signals do not always exist. Therefore, colour information which does not exist on the horizontal line is obtained from the horizontal line which is one line before.

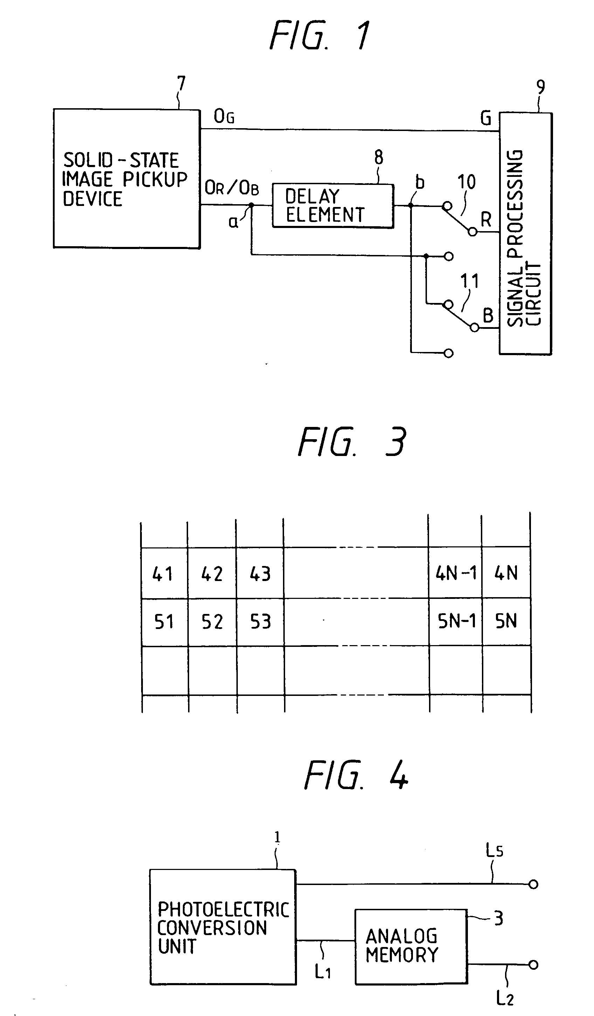

Fig. 1 is a schematic constructional diagram showing an example of a construction of a conventional photoelectric converting apparatus.

As shown in the diagram, by inputting R/Boutputs OR/OB of a solid-state image pickup device (photoelectric conversion unit) 7 to a delay element 8, a signal which is one horizontal period before a branch point a on the inputting side is always output to a branch point b on the outputting side of the delay element 8. Therefore, by switching means 10 and 11, signals of R, G, and B are always obtained.

There is also a case where a CCD type is mainly used as a delay element 8 and the delay element 8 is formed together with the solid-state image pickup device 7 on the same chip.

However, in the above conventional solid-state image pickup device, when a CCD type delay element is used as a delay element, if a sensor unit is constructed by an element other than of CCD type, manufacture becomes complicated, resulting in an increase in costs. On the other hand, in the case of the CCD type, since random access cannot be executed, it is a problem that outputs of the delay elements have to be extracted in the serial inputting order.

A photoelectric converting apparatus which comprises a photoelectric converting unit producing serial output signals is known from IEE Transactions on Electron Devices Vol. ED-32 No. 8, August 1985, New York, U.S. pages 1541-1545; Yazuki et al "A 5732 - element linear CCD image sensor". This describes a unit incorporating first and second CCD registers and a storage buffer. The CCD registers are located each side of a bilinear array of photoelectric converting elements. Even number and odd numbered elements are arranged in parallel with a half of one pixel horizontal stagger. Even numbered and odd numbered elements are connected in parallel to the parallel stage inputs of the first and second CCD registers respectively, the storage buffer being interposed between the odd numbered elements and one of the registers. Photoelectrically converted signals are thus input into the registers in parallel and output serially. Signals may thus be output simultaneously and in parallel from the respective CCD registers. No provision is made however for correcting signals produced by defective converting elements. The output signals necessarily follow a predetermined order and are at a predetermined timing.

### SUMMARY OF THE INVENTION

The photoelectric converting apparatus as described hereinbelow provides an alternative means of providing a delayed serial signal to that described with reference to figure 1.

Apparatus in accordance with the present invention is defined in the appended claims.

Conveniently, the photoelectric conversion unit and the analog memory can be formed on the same semiconductor substrate. For instance, if the photoelectric conversion unit and the analog memory are constructed by MOS type transistors or the like, they can be formed by the same process. Therefore, the apparatus can be easily manufactured and the apparatus in which the photoelectric conversion unit and the analog memory have the same characteristics can be obtained.

While the switching means may be controlled solely by a shift-register, in the preferred construction of this apparatus the switching means is controlled by a shift-register and by a separate pulse generating circuit. The latter allows arbitrary selection of selected signals stored by the capacitor means at an arbitrary timing and thus affords flexibility in the processing which is available.

While the analog memory of the aforesaid apparatus may comprise capacitors and pluralities of first and second switches it is mentioned that similar arrangements of capacitors and switches have been known in the circuit construction of sequential output photoelectric converting units, see for example U.S. Patent 4,831,451 and JP-A-57065074 (Patent Abstracts of Japan, vol. 6 No. 140 (E-121)(1028)).

### BRIEF DESCIRPTION OF THE DRAWINGS

Fig. 1 is a schematic diagram showing an example of a construction of a conventional solid-state image pickup device;
Fig. 2A is a schematic circuit constructional diagram of the first embodiment of a photoelectric converting apparatus according to the invention;
Fig. 2B is a timing chart for explaining the operation of the photoelectric converting apparatus;
Fig. 3 is an explanatory diagram showing a construction of pixels of the photoelectric conversion unit;
Fig. 4 is a schematic constructional diagram of the second embodiment of a photoelectric converting apparatus of the invention;
Fig. 5 is a schematic circuit constructional diagram of the third embodiment of a photoelectric converting apparatus of the invention;
Fig. 6 is a timing chart for explaining the operation of the photoelectric converting apparatus of the third embodiment.

### DETAILED DESCRIPTION OF THE PREFERRED EMBODIMENTS

An embodiment of the present invention will be described in detail hereinbelow with reference to the drawings.

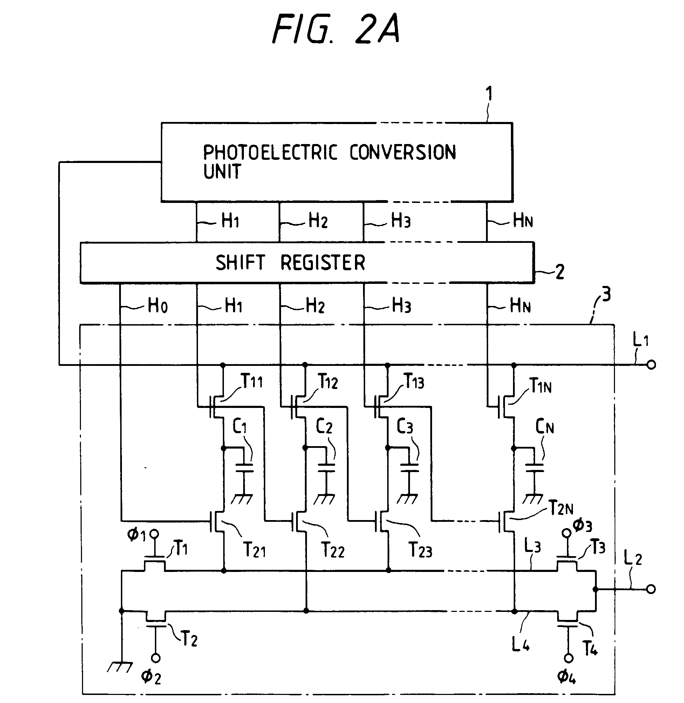

Fig. 2A is a schematic circuit contructional diagram of the first embodiment of a photoelectric converting apparatus of the invention.

In the diagram, reference numeral 1 denotes a photoelectric conversion unit to output an electric signal corresponding to the incident light. The unit 1 includes a plurality of photoelectric conversion elements. Reference numeral 2 indicates a shift register to drive the photoelectric conversion unit 1 and an analog memory 3; H₀ to H_{N} represent output lines of the shift register 2; L₁ a signal output line of the photoelectric conversion unit 1; and L₂ a memory output line of the analog memory 3.

In the analog memory 3, C₁ to C_{N} denote accumulation capacitors each for temporarily holding and storing a signal which is output to the signal output line L₁. T₁₁ to T_{1N} denote switches such as MOS transistors or the like for turning on/off the signal output line L₁ and the accumulation capacitors C₁ to C_{N} by output pulses O₁ to O_{N} which are output to the output lines H₁ to H_{N} of the shift register 2. L₃ and L₄ indicate memory output lines to output memory outputs; T₂₁ and T_{2N} denote switches such as MOS transistors or the like to turn on/ off the accumulation capacitors C1 to CN and the memory output lines L₃ and L₄ by the output pulses O₀ to O_{N-1} which are output to the output lines to H₀ to H_{N-1} of the shift register 2; T₃ and T₄ sample and hold MOS transistors to sample and hold the signals on the memory output lines L₃ to L₄; Ø₃ and Ø₄ gate pulses to control the turn on/off operations of the sample and hold MOS transistors T₃ and T₄; T₁ and T₂ resetting MOS transistors to reset the memory output lines L₃ and L_{4;} Ø₁ and Ø₂ gate pulse to control the on/off operation of the resetting MOS transistors T₁ and T₂.

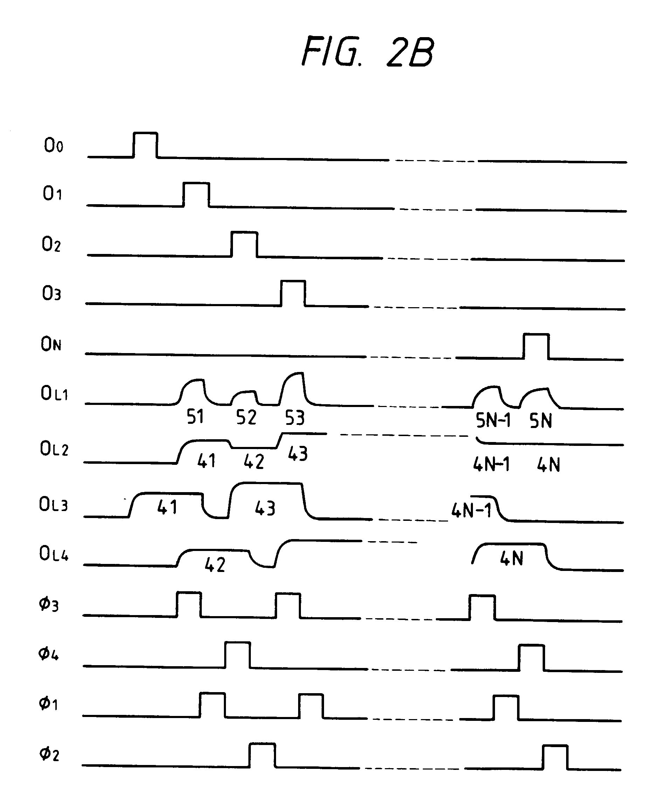

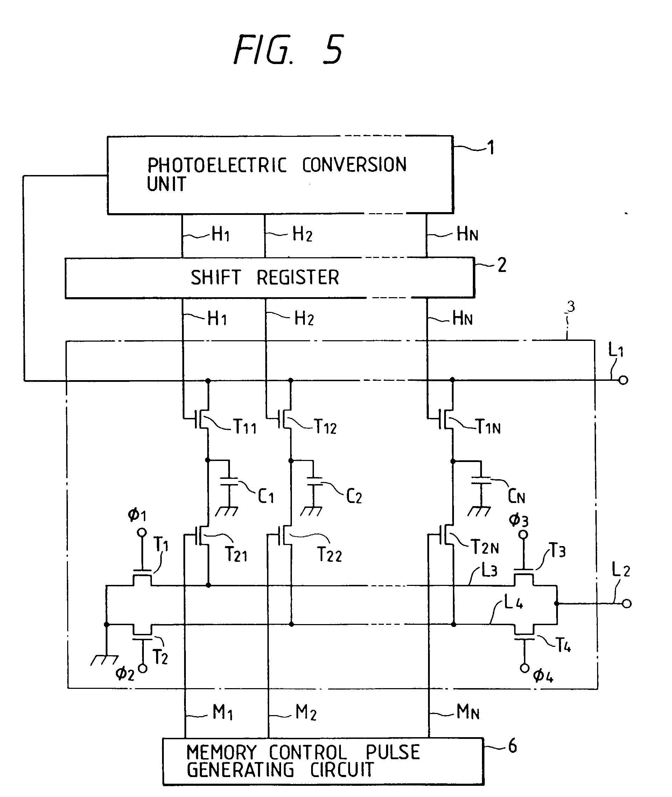

The operation of the photoelectric converting apparatus will now be described hereinbelow with reference to Figs. 2B and 3.

Fig. 2B is a timing chart for explaining the operation of the photoelectric converting apparatus.

Fig. 3 is an explanatory diagram showing a construction of pixels in the photoelectric conversion unit.

In Fig. 3, reference numerals 41 to 4N and 51 to 5N indicate pixels of successive horizontal lines.

It is now assumed that after the output signals corresponding to the incident light had been output to the output line L₁ from the pixels 41 to 4N in the photoelectric conversion unit 1, they were held and stored into the accumulation capacitors C₁ to C_{N} in the analog memory 3.

When the shift register 2 starts operating and the pulse O₀ is supplied to the output line H₀, the switch T₂₁ is turned on and a signal O_{L3} corresponding to the pixel 41 accumulated in the capacitor C₁ is output to the output line L₃. When the pulse O₁ is then supplied to the output line H₁ and the pulse ⌀₃ is supplied to the sample and hold MOS transistor T₃, a signal O_{L1} of the pixel 51 is output from the photoelectric conversion unit 1 to the output line L₁, the switch T₁₁ is turned on, and the signal corresponding to the pixel 51 is accumulated into the capacitor C₁. On the other hand, since the switch T₂₂ is also turned on, a signal O_{L4} corresponding to the pixel 42 accumulated in the capacitor C₂ is output to the output line L₄. Since the sample and hold MOS transistor T₃ is ON, the signal O_{L3} corresponding to the pixel 41 which has been output to the output line L₃ is taken out as an output signal O_{L2} from the output line L₂.

Then, when the resetting pulse Ø₁ is supplied, the output line L₃ is reset. After that, when the pulse O₂ is supplied from the shift register 2 to the output line H₂ and the sampling and holding pulse Ø₄ is supplied, the signal O_{L1} corresponding to the pixel 52 is output from the output signal line L₁ and the signal corresponding to the pixel 52 is accumulated into the capacitor C₂ through the switch T₁₂. At this time, the signal O_{L3} corresponding to the pixel 43 accumulated in the capacitor C₃ is output to the output line L₃. The signal O_{L4} corresponding to the pixel 42 which has been output to the output line L₄ is transmitted through the sample and hold MOS transistor T₄ and is output as an output signal O_{L2} to the output line L₂. Then, the resetting pulse Ø₂ is supplied and the output line L₄ is reset.

By repeating the operations similar to the above hereinafter, the signals O_{L1} and O_{L2} which are shifted by one horizontal period are simultaneously continuously output from the output lines L₁ and L₂.

Fig. 4 is a schematic constructional diagram of the second embodiment of a photoelectric converting apparatus of the invention.

The same parts and components as those shown in Fig. 2A are designated by the same reference numerals.

Reference numeral 1 indicates a photoelectric conversion unit to output a signal corresponding to the input image and also simultaneously output an output signal in a state in which no incident light is irradiated. L₅ indicates an output line to output a dark output. After the photoelectric conversion unit 1 generated an output S+N (including a noise signal N) corresponding to image information S to the output line L₁, the unit 1 resets the pixels for one horizontal period and drives so as to output a dark output N. The dark output (noise output) N is delayed by one horizontal period than the image output (signal + noise output) S+N.

At this time, therefore, if the analog memory 3 is driven in a manner similar to the first embodiment, the image output (signal + noise output) S+N which was delayed by one horizontal period is output from the memory output line L₂. Therefore, by executing an arithmetic operating process to subtract the dark output N from the image output S+N, fixed pattern noise of the photoelectric conversion unit 4 can be eliminated.

Fig. 5 is a schematic circuit constructional diagram of the third embodiment of a photoelectric converting apparatus of the invention.

The same parts and components as those shown in Fig. 2A are designated by the same reference numerals.

In the diagram, reference numeral 3 denotes an analog memory; 6 indicates a memory control pulse generating circuit; and M₁ to M_{N} memory control pulses outputs,

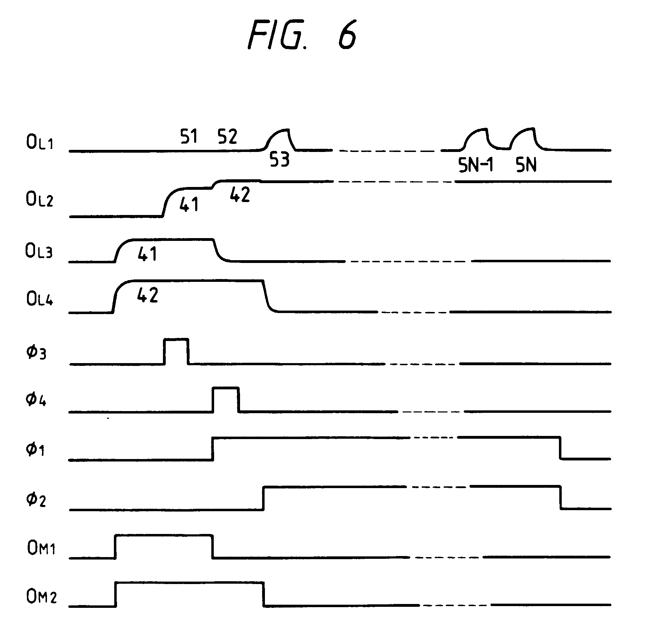

Fig. 6 is a timing chart for explaining the operation of the photoelectric converting apparatus.

It is now assumed that the photoelectric conversion unit 1 outputs the output signals corresponding to the incident light from the pixels 41 to 4N of one horizontal period to the output line L₁ and the signals 41 to 4N are simultaneously accumulated into the capacitors C₁ to C_{N} and, thereafter, the output signals corresponding to the incident light are output from the pixels 51 to 5N of the next line including defective pixels 51 and 52.

As shown in Fig. 6, before the signals corresponding to the defective pixels 51 and 52 are output from the photoelectric conversion unit 1 to the output line L₁, the signals of the pixels 41 and 42 are read out of the accumulation capacitors C₁ and C₂ to the output lines L₃ and L₄ by output pulses O_{M1} and O_{M2} from output lines M₁ and M₂ of the memory control pulse generating circuit 6. When the signal of the pixel 51 is output to the output line L₁, by turning on the sample and hold MOS transistor T₃, the signal O_{L3} of the pixel 41 is output as an output signal O_{L2} to the output line L₂. In a manner similar to the above, when the signal of the pixel 52 is output, the signal O_{L4} of the pixel 42 is also output as an output signal O_{L2} to the output line L₂. In this manner, the defective pixel can be corrected at an arbitrary timing.

As described in detail above, according to the photoelectric converting apparatus of the invention, the first signal which is output from the photoelectric conversion unit is stored in the analog memory and the first signal stored can be output from the analog memory at a desired timing in correspondence to the second signal which is output from the photoelectric conversion unit.

On the other hand, by using the analog memory, the photoelectric conversion unit and the analog memory can be also formed onto the same semiconductor substrate. For instance, if the photoelectric conversion unit and the analog memory are constructed by MOS type transistors or the like, they can be formed by the same process. Therefore, the apparatus can be easily manufactured and the apparatus in which the sensor unit and the memory unit have the same characteristics can be obtained. There is a large effect such that a system in which the small size, low costs, and multifunctions are realized can be accomplished.

## Claims

1. A photoelectric converting apparatus comprising:
a photoelectric conversion unit (1) including a plurality of photoelectric conversion elements and means of sequentially outputting photoelectrically converted signals (41-4N, 51-5N), produced by said photoelectric conversion elements, on a first output line (L1);
which apparatus is characterised by:
an analog memory (3) including capacitor means (C₁-C_{N}), and switching means (T₁₁-T_{1N,}T₂₁-T_{2N}) responsive to address signals (0₁-0_{N}, 0ₒ-0_{N-1}; 0₀-0_{N}, 0_{M1}-0_{MN}), for receiving and storing a first plurality (41-4N) of the photoelectrically converted signals (41-4N, 51-5N) sequentially output on said first output line (L1), and for outputting selected signals (41-4N; 41,42) of said first plurality (41-4N) of the photoelectrically converted signals (41-4N, 51-5N); and
control means (2; 2,6), co-operative with said switching means (T₁₁-T_{1N}, T₂₁-T_{2N}), for supplying said address signals (0₁-0_{N}, 0₀-0_{N-1}; 0₁-0_{N}, 0_{M1}-0_{MN}) to control the outputting of said selected signals (41-4N; 41,42) from said capacitor means (C₁-C_{N}) while a second plurality (51-5N) of the photoelectrically converted signals (41-4N, 51-5N) are sequentially output from said photoelectric conversion unit (1) on said first output line (L₁), and received by said analog memory (3).

2. An apparatus as claimed in claim 1 wherein said photoelectric conversion unit (1) and said analog memory (3) are provided on a common semiconductor substrate.

3. An apparatus as claimed in either claim 1 or 2 wherein said first output line (L1) is connected to an output terminal of said apparatus.

4. An apparatus as claimed in any preceding claim wherein said control means (2,6) is operable to supply address signals (0_{M1},0_{M2}) to said switching means (T₂₁,T₂₂) to select and control the outputting of selected signals (41,42) for replacing defective element signals (51,52) amongst said second plurality (51-5N) of the photoelectrically converted signals (41-4N, 51-5N).

5. An apparatus as claimed in either claim 1 or 2 wherein:
said photoelectric conversion unit (1) is operable to provide a dark noise signal at an output (L5) thereof in a state when no light is incident thereupon; and
said apparatus includes arithmetic operating means connected to said output (L5) of said photoelectric conversion unit (1) and to said analog memory (3) to subtract said dark noise signal output at said output (L5) of said photoelectric conversion unit (1) from said selected signals (41-4N; 41,42) output from said analog memory (3).

6. An apparatus as claimed in claim 1 wherein said analog memory (3) comprises:
first and second pluralities of capacitors (C₁,C₃, .., C_{N-1} and C₂, C₄, .., C_{N}) each of which capacitors (C₁-C_{N}) is connected to said first output line (L1) via a respective one of a plurality of first switches (T₁₁-T_{1N}); and
output means (T₂₁-T_{2N}, T₁-T₄, L₂-L₄) including a second output line (L2), a plurality of second switches (T₂₁-T_{2N}) connected to said first and second pluralities of capacitors (C₁, C₃, ..., C_{N-1} and C₂, C₄, ..., C_{N}), and alternation means (T₁-T₄, L₃, L₄), connected between said plurality of second switches (T₂₁-T_{2N}) and said second output line (L2), for alternately outputting said selected signals (41-4N; 41,42) stored by said first and second pluralities of capacitors (C₁, C₃, ..., C_{N-1} and C₂, C₄, ..., C_{N}) on said second output line (L2).

7. An apparatus as claimed in claim 6 wherein said alternation means (T₁-T₄, L₃, L₄) comprises:
a third output line (L3) connected via respective odd ones of said second switches (T₂₁, T₂₃, ..) to said first plurality of capacitors (C₁, C₃, ..);
a fourth output line (L4) connected via other respective even ones of said second switches (T₂₂, T₂₄, ..) to said second plurality of capacitors (C₂, C₄, ..);
respective reset switches (T₁, T₂) connected to said third and fourth output lines (L₃, L₄); and
respective, alternately operable, output switches (T₃, T₄) connected between both third and fourth output lines (L₃, L₄) and said second output line (L₂).

8. An apparatus as claimed in claims 6 or 7 wherein said control means (2; 2,6) comprises a shift register (2) successive stage outputs (H₁-H_{N}) of which are connected to respective control gates of successive ones of said plurality of first switches (T₁₁-T_{1N}), which successive first switches (T₁₁, T₁₂, ...) are connected to respective capacitors (C₁, C₂, ..) alternately of said first and second pluralities of capacitors (C₁,C₃, and C₂, C₄ ...).

9. An apparatus as claimed in claim 8 wherein successive stage outputs (H₀-H_{N-1}) of said shift register (2) are connected to respective control gates of successive ones of said plurality of second switches (T₂-T_{2N}), which successive second switches (T₂₁, T₂₂, ..) are connected to respective capacitors (C₁, C₂, ...) alternately of said first and second pluralities of capacitors (C₁, C₃, ... & C₂, C₄, ...) so that the second and first switches (T₂₁ and T₁₁; ..., T_{2N} and T_{1N}) connected to each respective capacitor (C₁, .... C_{N}) are connected to successive stage outputs (H₀ & H₁, ..., H_{N-1}, & H_{N}) of said shift register (2).

10. An apparatus as claimed in claim 8 wherein said control means (2,6) comprises also a pulse generating circuit (6) having parallel outputs (M₁-M_{N}) connected to respective control gates of successive ones of said plurality of second switches (T₂₁-T_{2N}).

## Patentansprüche

1. Photoelektrisches Umwandlungsgerät mit:
einer photoelektrischen Umwandlungseinheit (1), die eine Vielzahl von photoelektrischen Umwandlungselementen und Einrichtungen zum aufeinanderfolgenden Ausgeben von durch photoelektrische Umwandlungselemente erzeugten photoelektrisch umgewandelten Signalen (41-4N, 51-5N) auf eine erste Ausgangsleitung (L₁) enthält;
**gekennzeichnet durch**:
einen analogen Speicher (3) mit Kondensatoreinrichtungen (C₁-C_{N}) und auf Adreßsignale (O₁-O_{N}, O₀-O_{N-1}; O₀-O_{N}, O_{M1}-O_{MN}) ansprechende Schalteinrichtungen (T₁₁-T_{1N}, T₂₁-T_{2N}) zum Empfangen und Speichern einer ersten Vielzahl (41-4N) der photoelektrisch umgewandelten und nacheinander auf der Ausgangsleitung (L₁) ausgegebenen Signale (41-4N, 51-5N) und zum Ausgeben ausgewählter Signale (41-4N; 41, 42) der ersten Vielzahl (41-4N) der photoelektrisch umgewandelten Signale (41-4N, 51-5N); und
eine Steuereinrichtung (2; 2, 6), die zusammen mit den Schalteinrichtungen (T₁₁-T_{1N}, T₂₁-T_{2N}) wirkt, um die Adreßsignale (O₁-O_{N}, O₀-O_{N-1}; O₁-O_{N}, O_{M1}-O_{MN}) zum Steuern des Ausgebens der ausgewählten Signale (41-4N; 41, 42) von den Kondensatoreinrichtungen (C₁-C_{N}) zuzuführen, während eine zweite Vielzahl (51-5N) der photoelektrisch umgewandelten Signale (41-4N, 51-5N) aufeinanderfolgend von der photoelektrischen Umwandlungseinheit (1) auf der ersten Ausgangsleitung (L₁) ausgegeben und von dem analogen Speicher (3) empfangen wird.

2. Gerät nach Anspruch 1, bei dem die photoelektrische Umwandlungseinheit (1) und der analoge Speicher (3) auf einem gemeinsamen Halbleitersubstrat ausgebildet sind.

3. Gerät nach Anspruch 1 oder 2, bei dem die erste Ausgangsleitung (L₁) mit einem Ausgangsanschluß des Gerätes verbunden ist.

4. Gerät nach einem der vorhergehenden Ansprüche, in dem die Steuereinrichtung (2, 6) betreibbar ist, den Schalteinrichtungen (T₂₁, T₂₂) Adreßsignale (O_{M1}, O_{M2}) zuzuführen, um das Ausgeben von ausgewählten Signalen (41, 42) auszuwählen und zu steuern, so daß fehlerhafte Elementsignale (51, 52) unter der zweiten Vielzahl (51-5N) der photoelektrisch umgewandelten Signale (41-4N, 51-5N) ersetzbar sind.

5. Gerät nach Anspruch 1 oder 2, bei dem:
die photoelektrische Umwandlungseinrichtung (1) betreibbar ist, um ein Dunkel-Störsignal an einem Ausgang (L₅) davon bereitzustellen, das in einem Zustand ist, in dem kein Licht darauf auftrifft; und
das Gerät eine arithmetische Funktionseinrichtung einschließt, die mit dem Ausgang (L₅) der photoelektrischen Umwandlungseinheit (1) und dem analogen Speicher (3) verbunden ist, um das Dunkel-Störsignal an den Ausgang (L₅) der photoelektrischen Umwandlungseinheit (1) ausgegeben wird, von den ausgewählten Signalen (41-4N; 41, 42) zu subtrahieren, die von dem analogen Speichers (3) ausgegeben werden.

6. Gerät nach Anspruch 1, bei dem der analoge Speicher (3) umfaßt:
erste und zweite Vielzahlen von Kondensatoren (C₁, C₃ ..., C_{N-1} und C₂, C₄, ..., C_{N}), von denen jeder Kondensator (C₁-C_{N}) mit der ersten Ausgangsleitung (L₁) über einen entsprechenden Schalter aus einer Vielzahl von ersten Schaltern (T₁₁-T_{1N}) verbunden ist; und
Ausgabeeinrichtungen (T₂₁-T_{2N}, T₁-T₄, L₂-L₄), die eine zweite Ausgangsleitung (L₂), eine Vielzahl von zweiten Schaltern (T₂₁-T_{2N}), die mit den ersten und zweiten Vielzahlen von Kondensatoren (C₁, C₃, ..., C_{N-1} und C₂, C₄, ..., C_{N}) verbunden sind, und Wechseleinrichtungen (T₁-T₄, L₃, L₄), die zwischen der Vielzahl von zweiten Schaltern (T₂₁-T_{2N}) und der zweiten Ausgangsleitung (L₂) geschaltet sind, umfassen, damit wechselweise ausgewählte in den ersten und zweiten Vielzahlen von Kondensatoren (C₁, C₃,..., C_{N-1} und C₂, C₄, ..., C_{N}) gespeicherte Signale (41-4N; 41, 42) auf der zweiten Ausgangsleitung (L₂) ausgebbar sind.

7. Gerät nach Anspruch 6, bei dem die Wechseleinrichtungen (T₁-T₄, L₃, L₄) umfassen:
eine dritte Ausgangsleitung (L₃), die über entsprechende ungeradzahlige der zweiten Schalter (T₂₁, T₂₃, ...) mit der ersten Vielzahl von Kondensatoren (C₁, C₃, ...) verbunden ist;
eine vierte Ausgangsleitung (L₄), die über andere entsprechende geradzahlige der zweiten Schalter (T₂₂, T₂₄, ...) mit der zweiten Vielzahl von Kondensatoren (C₂, C₄, ...) verbunden ist;
entsprechende Rücksetzschalter (T₁, T₂), die mit der dritten und der vierten Ausgangsleitung (L₃, L₄) verbunden sind; und entsprechend wechselweise betreibbare Ausgabeschalter (T₃, T₄), die sowohl mit der dritten und der vierten Ausgangsleitung (L₃, L₄) als auch mit der zweiten Ausgangsleitung (L₂) verbunden sind.

8. Gerät nach Anspruch 6 oder 7, bei dem die Steuereinrichtung (2; 2, 6) ein Schieberegister (2) aufweist, dessen aufeinanderfolgende Stufenausgänge (H₁-H_{N}) mit entsprechenden Steuereingängen von aufeinanderfolgenden der Vielzahl von ersten Schaltern (T₁₁-T_{1N}) verbunden sind, wobei diese aufeinanderfolgenden ersten Schalter (T₁₁, T₁₂, ...) abwechselnd mit entsprechenden Kondensatoren (C₁, C₂, ...) der ersten und zweiten Vielzahl von Kondensatoren (C₁, C₃, ... und C₂, C₄, ...) verbunden sind.

9. Gerät nach Anspruch 8, bei dem aufeinanderfolgende StufenAusgänge (H₀-H_{N-1}) des Schieberegisters (2) mit den entsprechenden Steuereingängen von aufeinanderfolgenden der Vielzahl von zweiten Schaltern (T₂-T_{2N}) verbunden sind, wobei diese aufeinanderfolgenden zweiten Schalter (T₂₁, T₂₂, ...) abwechselnd mit entsprechenden Kondensatoren (C₁, C₂, ...), aus den ersten und zweiten Vielzahlen von Kondensatoren (C₁, C₃, ... und C₂, C₄, ...), verbunden sind, so daß die mit jedem entsprechenden Kondensator (C₁, ..., C_{N}) verbundenen zweiten und ersten Schalter (T₂₁ und T₁₁; ..., T_{2N} und T_{1N}), mit aufeinanderfolgend Stufen-Ausgängen (H₀ & H₁, ... , H_{N-1} & H_{N}) des Schieberegisters (2) verbunden sind.

10. Gerät nach Anspruch 8 , bei dem die Steuereinrichtung (2, 6) auch eine Impulserzeugungsschaltung (6) umfaßt, der parallele Ausgänge (M₁-M_{N}) aufweist, die mit entsprechenden Steuereingängen von aufeinanderfolgenden der Vielzahl der zweiten Schalter verbunden sind (T₂₁-T_{2N}).

## Revendications

1. Appareil de conversion photoélectrique comportant :
une unité (1) de conversion photoélectrique comprenant plusieurs éléments de conversion photoélectrique et des moyens destinés à délivrer séquentiellement en sortie des signaux (41-4N, 51-5N) résultant d'une conversion photoélectrique, produit par lesdits éléments de conversion photoélectrique, sur une première ligne (L1) de sortie ;
lequel appareil est caractérisé par :
une mémoire analogique (3) comprenant des moyens à condensateur (C₁-C_{N}), et des moyens de commutation (T₁₁-T_{1N}, T₂₁-T_{2N}) qui, en réponse à des signaux d'adresses (O₁-O_{N}, O₀-O_{N-1} ; O₀-O_{N}, O_{M1}-O_{MN}), reçoivent et stockent un premier groupe (41-4N) des signaux (41-4N ; 51-5N) résultant d'une conversion photoélectrique, délivrés séquentiellement en sortie sur ladite première ligne (L1) de sortie, et délivrent en sortie des signaux choisis (41-4N ; 41, 42) dudit premier groupe (41-4N) des signaux (41-4N, 51-5N) résultant d'une conversion photoélectrique ; et
des moyens de commande (2 ; 2, 6), coopérant avec lesdits moyens de commutation (T₁₁-T_{1N}, T₂₁-T_{2N}) pour fournir lesdits siganux d'adresses (O₁-O_{N}, O₀-O_{N-1} ; O₀-O_{N}, O_{M1}-O_{MN}) afin de commander la sortie desdits signaux choisis (41-4N ; 41, 42) desdits moyens à condensateurs (C₁-C_{N}), tandis qu'un second groupe (51-5N) des signaux (41-4N, 51-5N), résultant d'une conversion photoélectrique, sont délivrés séquentiellement en sortie par ladite unité (1) de conversion photoélectrique sur ladite première ligne (L1) de sortie, et sont reçus par ladite mémoire analogique (3).

2. Appareil selon la revendication 1, dans lequel ladite unité (1) de conversion photoélectrique et ladite mémoire analogique (3) sont situées sur un substrat semiconducteur commun.

3. Appareil selon la revendication 1 ou 2, dans lequel ladite première ligne (L1) de sortie est connectée à une borne de sortie dudit appareil.

4. Appareil selon l'une quelconque des revendications précédentes, dans lequel lesdits moyens de commande (2, 6) peuvent fonctionner de façon à appliquer des signaux d'adresses (O_{M1}, O_{M2}) auxdits moyens de commutation (T₂₁, T₂₂) pour sélectionner et commander la sortie de signaux choisis (41, 42) afin de remplacer des signaux d'éléments défectueux (51, 52) parmi ledit second groupe (51-5N) des signaux (41-4N, 51-5N) résultant d'une conversion photoélectrique.

5. Appareil selon l'une des revendications 1 et 2, dans lequel :
ladite unité (1) de conversion photoélectrique peut fonctionner pour produire un signal de bruit d'obscurité à une sortie (L5) de cette unité dans un état dans lequel elle ne reçoit aucune lumière ; et
ledit appareil comprend un moyen de traitement arithmétique connecté à ladite sortie (L5) de ladite unité (1) de conversion photoélectrique et à ladite mémoire analogique (3) pour soustraire ledit signal de sortie de bruit d'obscurité à ladite sortie (L5) de ladite unité (1) de conversion photoélectrique desdits signaux choisis (41-4N ; 41, 42) sortant de ladite mémoire analogique (3).

6. Appareil selon la revendication 1, dans lequel ladite mémoire analogique (3) comporte :
des premier et second groupes de condensateurs (C₁, C₃.., C_{N-1}et C₂, C₄ .., C_{N}), chacun des condensateurs (C₁-C_{N}) étant connecté à ladite première ligne de sortie (L1) par l'intermédiaire de l'un, respectif, de plusieurs premiers commutateurs (T₁₁-T_{1N}) ; et
des moyens de sortie (T₂₁-T_{2N}, T₁-T₄, L₂-L₄) comprenant une seconde ligne de sortie (L2), plusieurs seconds commutateurs (T₂₁-T_{2N}) connectés auxdits premier et second groupes de condensateurs (C₁, C₃ ..., C_{N-1} et C₂, C₄ ..., C_{N}), et des moyens d'alternance (T₁-T₄, L₃, L₄) connectés entre ledit groupe de seconds commutateurs (T₂₁-T_{2N}) et ladite seconde ligne de sortie (L2), pour délivrer alternativement en sortie lesdits signaux choisis (41-4N ; 41, 42) stockés par lesdits premier et second groupes de condensateurs (C₁, C₃ ..., C_{N-1} et C₂, C₄ ..., C_{N}) sur ladite seconde ligne de sortie (L2).

7. Appareil selon la revendication 6, dans lequel lesdits moyens d'alternance (T₁-T₄, L₃, L₄) comprennent :
une troisième ligne de sortie (L3) connectée par certains, impairs, desdits seconds commutateurs (T₂₁, T_{23,} ..) audit premier groupe de condensateurs (C₁, C₃, ..) ;
une quatrième ligne de sortie (L4) connectée par d'autres commutateurs respectifs et pairs desdits seconds commutateurs (T₂₂, T₂₄, ..) audit second groupe de condensateurs (C₂, C₄, ..) ;
des commutateurs respectifs (T₁, T₂) de restauration connectés auxdites troisième et quatrième lignes de sortie (L₃, L₄) ; et
des commutateurs respectifs de sortie (T₃, T₄), pouvant être commandés en alternance, connectés entre les deux troisième et quatrième lignes de sortie (L₃, L₄) et ladite deuxième ligne de sortie (L₂).

8. Appareil selon la revendication 6 ou 7, dans lequel lesdits moyens de commande (2 ; 2, 6) comprennent un registre à décalage (2) dont des sorties d'étages successifs (H₁-H_{N}) sont connectées à des grilles de commande respectives de certains, successifs, dudit groupe de premiers commutateurs (T₁₁-T_{1N}), lesquels premiers commutateurs successifs (T₁₁, T₁₂, ...) sont connectés à des condensateurs respectifs (C₁, C₂, ...) alternant entre lesdits premier et second groupes de condensateurs (C₁, C₃, et C₂, C₄, ...).

9. Appareil selon la revendication 8, dans lequel les sorties d'étages successifs (H₀-H_{N-1}) dudit registre à décalage (2) sont connectées à des grilles de commande respectives de certains, successifs, dudit groupe de seconds commutateurs (T₂-T_{2N}), lesquels seconds commutateurs successifs (T₂₁, T₂₂, ...) sont connectés à des condensateurs respectifs (C₁, C₂, ...) alternant entre lesdits premier et second groupes de condensateurs (C₁, C₃, ... & C₂, C₄, ...) de manière que les second et premier condensateurs (T₂₁ et T₁₁, ..., T_{2N} et T_{1N}) connectés à chaque condensateur respectif (C_{1,} ... C_{N}) soient connectés à des sorties d'étages successifs (H₀ & H_{1,} H_{N-1}, & H_{N}) dudit registre à décalage (2).

10. Appareil selon la revendication 8, dans lequel lesdits moyens de commande (2 ,6) comprennent aussi un circuit (6) de génération d'impulsions ayant des sorties parallèles (M₁-M_{N}) connectées à des grilles de commande respectives de certains, successifs, dudit groupe de seconds commutateurs (T₂₁-T_{2N}).
